# EUROPÄISCHE PATENTANMELDUNG

(11) **EP 2 472 228 A1**
(43) Veröffentlichungstag der Anmeldung: **04.07.2012**
(21) Anmeldenummer: 10197424.4
(22) Anmeldetag: 30.12.2010
(51) Int. Cl.: G01C 21/36

(54) **System zur Ortserfassung von Adressen**

(71) Anmelder: Deutsche Post AG, 53113 Bonn (DE)
(72) Erfinder: Boris, Paul, 53115 Bonn (DE); Verena, Wild, 53129 Bonn (DE); Keith, Ulrich, 53227 Bonn-Oberkasssel (DE)
(74) Vertreter: Jostarndt, Hans-Dieter

(57) **Zusammenfassung**

Die Erfindung bezieht sich auf ein System (1) zur Ortserfassung von Adressenangaben (31), mit dem Adressenorte (33) mit eindeutigen Angaben versehen und anhand der eindeutigen Angaben wiedergefunden werden können. Das System (1) umfasst dazu ein Computersystem (2) mit Datenspeicher (21) zur Speicherung von Adressdaten (3), die Adressenangaben (31) und den Adressenangaben (31) zugeordnete Geokoordinaten (32) umfassen, ein Bestätigungsgerät (4) zur Bestätigung des Erreichens eines Adressenortes (33) mit zugehörigen Adressenangaben (31), ein Positionsbestimmungsgerät (5) zur Feststellung von Geokoordinaten (32) an diesem Adressenort (33), wobei das Bestätigungsgerät (4) mit dem Positionsbestimmungsgerät (5) über eine Datenverbindung (6) verbunden ist und dazu ausgestaltet ist, nach der Bestätigung des Erreichens des Adressenortes (33) ein Tiggersignal (41) an das Positionsbestimmungsgerät (5) zu senden, und das Positionsbestimmungsgerät (5) dazu ausgestaltet ist, nach Empfangen des Triggersignals (41) die Geokoordinaten (32) des Adressenortes (33) festzustellen, und das Bestätigungsgerät (4) oder das Positionsbestimmungsgerät (5) dazu ausgestaltet ist, anschließend die Geokoordinaten (32) des Adressenortes (33) mit den Adressenangaben (31) zu dem Adressenort (33) zu Adressdaten (3) zu verknüpfen und zum Computersystem (2) zu übertragen (T1, T2).

## Beschreibung

### Gebiet der Erfindung

Die Erfindung betrifft ein System zur Ortserfassung von Adressen und ein Verfahren zum Betreiben eines solchen Systems.

### Hintergrund der Erfindung

Kurierdienste sind zum Liefern oder Abholen von Waren auf zuverlässige Abhol- oder Lieferadressen angewiesen, um diese Fahrten mit möglichst wenig Zeitaufwand oder Materialaufwand zu planen. Abhol- und Lieferfahrten betreffen alle Arten von Fahrten, bei denen entweder ein Lieferobjekt einem Empfänger an seinen Adressenort geliefert wird oder ein Lieferobjekt von einem Absender an seinem Adressenort abgeholt wird. Gerade in Gebieten mit nicht aktuellen oder nicht vorhandenen Adressverzeichnissen kann die Auslieferung oder Abholung eines Objektes für einen bestimmten Adressenort problematisch oder gar unmöglich sein. In manchen Gebieten der Erde sind manchmal gar keine üblichen Adressenorte verfügbar, sondern der Kurierdienst hat nur eine eventuell recht vage Wegbeschreibung zum Erreichen des Empfängers/Absenders zur Verfügung. Diese Beschreibung kann eventuell mehrdeutig sein und führt erst zusammen mit Auskünften der Bevölkerung vor Ort zum Erreichen des vorgesehenen Empfängers/Absenders. Es wäre daher von großer Hilfe, ein System zur Verfügung zu haben, mit dem solche schwer auffindbaren Empfänger/Absender bzw. deren Adressenorte mit eindeutigen Angaben versehen werden könnten und/oder anhand der eindeutigen Angaben wiedergefunden werden könnten.

### Zusammenfassung der Erfindung

Es ist daher eine Aufgabe der Erfindung ein System bereitzustellen, mit dem Adressenorte mit eindeutigen Angaben versehen werden, so dass anhand der eindeutigen Angaben der Adressenort wiedergefunden werden kann.

Diese Aufgabe wird gelöst durch ein System zur Ortserfassung von Adressenangaben umfassend ein Computersystem mit Datenspeicher zur Speicherung von Adressdaten, die Adressenangaben und den Adressenangaben zugeordnete Geokoordinaten umfassen, ein Bestätigungsgerät zur Bestätigung des Erreichens eines Adressenortes mit zugehörigen Adressenangaben, ein Positionsbestimmungsgerät zur Feststellung von Geokoordinaten an diesem Adressenort, wobei das Bestätigungsgerät mit dem Positionsbestimmungsgerät über eine Datenverbindung verbunden ist und dazu ausgestaltet ist, nach der Bestätigung des Erreichens des Adressenortes ein Triggersignal an das Positionsbestimmungsgerät zu senden, und das Positionsbestimmungsgerät dazu ausgestaltet ist, nach Empfangen des Triggersignals die Geokoordinaten des Adressenortes festzustellen, und das Bestätigungsgerät oder das Positionsbestimmungsgerät dazu ausgestaltet ist, anschließend die Geokoordinaten des Adressenortes mit den Adressenangaben zu dem Adressenort zu Adressdaten zu verknüpfen und zum Computersystem zu übertragen.

Ein solches System führt zu einer Optimierung des erneuten Erreichens von Adressenorten (beispielsweise mit einem Kurierfahrzeug), da nach einer Ortserfassung des Adressenortes dieser Adressenort über die Geokoordinaten zu diesem Adressenort mit eindeutigen Angaben versehen ist und somit jederzeit leicht wiedergefunden werden kann, insbesondere auch noch dann wenn sich die Gegebenheiten der Adressenangaben geändert haben. Solche Änderungen können beispielsweise durch den Bau von Wegen, Straßen, Häusern oder deren Veränderung oder Umbenennungen verursacht werden. Durch das erfindungsgemäße System wird eine Person oder ein Kurierdienst in die Lage versetzt, die erneute Ansteuerung dieses Adressenortes unabhängig von den momentanen örtlichen Gegebenheiten durchzuführen. Der Adressenort soll beispielsweise zum Transport von Objekten zu einem Adressenort hin (Lieferung von Objekten) oder von einem Adressenort weg (Abholung von Objekten) erreicht werden. Das System ermöglicht eine schnellere, einfachere oder effektivere Abholung / Lieferung von Lieferobjekten. Das in der vorliegenden Erfindung beanspruchte System ist mittels der Eingaben der Geokoordinaten ein lernendes System. Kurierdienste können hier alle Arten von Kurierdiensten, z.B. DHL oder andere Kurierdienste, sein. Kurierfahrzeuge können Fahrtzeuge aller Art sein, üblicherweise Transporter oder Trucks. In alternativen Ausführungsformen können die Kurierfahrzeuge auch Fahrräder sein. Gegebenenfalls erfolgt der Kurierdienst zu Fuß. Die Lieferobjekte, die mit den Abhol- oder Lieferfahrten transportiert werden, können Objekte aller Art sein, beispielsweise Pakete, Briefe, Behälter oder andere Objekte.

Der Ausdruck "Ortserfassung" bezeichnet hier die Bestimmung und Zuordnung von Geokoordinaten zu einem Ort, beispielsweise einem Adressenort. Der Ausdruck "verknüpfen" bezeichnet hierbei eine Verbindung zweier Datensätze, den Adressenangaben und den Geokoordinaten, zu einem gemeinsamen Datensatz, den Adressdaten. Diese Verknüpfung kann im Rahmen der vorliegenden Erfindung auf unterschiedliche Art und Weise realisiert werden. Beispielsweise können die Adressdaten in Form einer MS-Excel-Tabelle abgelegt werden, wobei die Adressdaten und die Geokoordinaten in bestimmte Felder der MS-Excel-Tabelle eingetragen werden. Es kann dabei eine MS-Excel-Tabelle beispielsweise für jede einzelnen Adressdaten vorgesehen sein oder eine MS-Excel-Liste umfasst alle Adressdaten in zeilenweiser (oder spaltenweiser) Form als gemeinsame MS-Excel-Tabelle. In einer anderen Ausführungsform können die Adressdaten in Form einer spezifischen graphischen Oberfläche (beispielsweise in einer MS-Access-Datenbank) dargestellt werden, in der die entsprechenden Daten (Adressenangaben und Geokoordinaten) eingebunden sind. Die Adressenangaben und Geokoordinaten können in einer anderen Ausführungsform auch als Datenfiles mit einem charakteristischen Namen, beispielsweise einem spezifischen Identifikationscode, abgelegt sein. Ein Programm zur Darstellung der Adressdaten greift dann auf die entsprechend bezeichneten Datenfiles mit gleichem Identifikationscode zu. Die Datenfiles können auch über Computerlinks in entsprechend gestalteten Anzeigemasken eingebunden werden. Die Identifikationscodes können beispielsweise zusammen mit den Datenfiles in einer Datenbank abgelegt sein. Der Zugriff auf die Datenfiles könnte beispielsweise über SQL-Anweisungen programmiert sein.

Der Ausdruck "Adressenangaben" bezeichnet hier Angaben, die geeignet sind, einen bestimmten Ort zielgerecht aufzusuchen. Typische Adressenangaben beinhalten beispielsweise Angabe der Straße, der Hausnummer, des Ortes und einer Postleitzahl für einen bestimmten Ort. Adressenangaben können aber auch Wegbeschreibungen zu einem bestimmten Punkt sein, beispielsweise "das vierte Haus am linken Ufer des Flusses Y flußabwärts von Ortschaft X aus gesehen". Als Adressenort wird der Ort bezeichnet, der den Adressenangaben entspricht. Als Ortserfassung wird ein Vorgang bezeichnet, der die Adressenangaben auf eine objektive Basis stellt. Eine solche objektive Basis stellen Geokoordinaten dar, da jeder Ort durch charakteristische Geokoordinaten eindeutig bezeichnet wird. Adressdaten sind hierbei computergespeicherte Daten mit einer Datenstruktur, die die Adressenangaben und die diesen Angaben zugeordneten Geokoordinaten enthält.

Das Positionsbestimmungsgerät bezeichnet jede Art von Gerät, das geeignet ist, die Geokoordinaten an einem bestimmten Ort zu bestimmen. Mit den Geokoordinaten (geographische Breite und geographische Länge) lässt sich die Lage jedes Punktes auf der Erde beschreiben. Die Erde wird dabei in 360 Längengrade und 180 Breitengrade aufgeteilt. Diese Geokoordinaten können mittels des globalen Navigationssatellitensystems (GNSS) weltweit mit entsprechenden Empfangsgeräten auf der Erde und in der Luft durch den Empfang der Signale von Navigationssatelliten bestimmt werden. Beispiele für bereits betriebene oder in Zukunft verfügbare Satellitennavigationssysteme sind das Galileo-System der Europäischen Union, das amerikanische Globale Positionsbestimmungssystems GPS, das russische GLONASS oder das chinesische Compass-G2. Das Positionsbestimmungsgerät gemäß der vorliegenden Erfindung ist in der Lage, zumindest die Signale eines der voranstehenden Satellitennavigationssysteme zu empfangen und daraus Geokoordinaten zu bestimmen. In einer Ausführungsform umfasst das Positionsbestimmungsgerät einen GPS-Mikrocontrollerchip. GPS-Mikrocontrollerchips interpretieren Signale von GPS-Satelliten und bestimmen die Position des GPS-Empfängers, also des Positionsbestimmungsgeräts und damit die Geo-Position des Adressenortes.

Das Bestätigungsgerät wird dazu verwendet, das Erreichen eines Adressenortes bestimmten Adressenangaben zuzuordnen. Beispielsweise soll ein Objekt zu einem Empfänger, der an einem bestimmten Adressenort wohnt, transportiert werden. Der Transportvorgang wird beispielsweise unter einer Auftragsnummer abgewickelt. Dieser Auftragsnummer liegen Adressenangaben zu Grunde, damit der Transportvorgang ausgeführt werden kann. Nach Erreichen des Adressenortes wird der Transportauftrag als beendet quittiert. Diese Quittierung findet am Adressenort selber statt. Das Bestätigungsgerät zur Bestätigung des Erreichens des Adressenortes kann jedes dafür geeignete Gerät sein. Die Betätigung löst das Triggersignal für das Positionsbestimmungsgerät aus. Das Erreichen des Adressenortes kann dabei unabhängig von einer Aushändigung oder Abholung des Objekts festgestellt werden. Die Datenverbindung zur Übertragung des Triggersignals zwischen Positionsbestimmungsgerät und Bestätigungsgerät kann jede geeignete Datenverbindung sein. Beispielsweise ist eine solche Datenverbindung ein Kabel oder eine Bluetooth-Verbindung. In einer Ausführungsform sind das Bestätigungsgerät und das Positionsbestimmungsgerät in einem gemeinsamen Gerätegehäuse angeordnet. Dadurch muss der Benutzer nur ein gemeinsames Gerät mit sich führen, was die Handhabung erleichtert. Durch die Vermeidung notwendiger gehäuseübergreifender Datenverbindungen ist das Gesamtgerät robuster. Hier wird die Datenverbindung über ein Kabel oder eine Leiterbahn auf einer Platine hergestellt.

Das Ausdruck "zum Computersystem übertragen" kann dabei eine sofortige Übertragung beispielsweise mittels einer Mobilfunkverbindung zu dem Computersystem oder eine spätere Übertragung über eine zwischen dem Bestätigungsgerät und/oder Positionsbestimmungsgerät und dem Computersystem hergestellte Datenverbindung, beispielsweise mittels eines Aufnahmegeräts mit Computerschnittstelle, bezeichnen. Im letzteren Fall wird das Bestätigungsgerät und/oder Positionsbestimmungsgerät in das Anschlussgerät gestellt oder damit verbunden und die Adressdaten zu dem Adressenort vom Computersystem ausgelesen. Hierbei umfassen Bestätigungsgerät und/oder Positionsbestimmungsgerät einen geeigneten Datenspeicher zumindest zum zwischenzeitlichen Speichern der Adressdaten.

Das Computersystem kann jedes für die Ausführung des erfindungsgemäßen Systems und die Speicherung und Änderung der Adressdaten geeignetes Computersystem sein, beispielsweise ein serverbasiertes Computersystem. In einer Ausführungsform umfasst dass Computersystem mindestens ein Aufnahmegerät mit Computerschnittstelle zur Übertragung der verknüpften Adressdaten zum Computersystem. Dieses Aufnahmegerät kann beispielsweise das Bestätigungsgerät und/oder das Positionsbestimmungsgerät und/oder das gemeinsame Gehäuse mit Bestätigungs- und Positionsbestimmungsgerät aufnehmen, wobei die aufgenommenen Geräte eine Schnittstelle als Datenaus-/eingang besitzen, die mit einer entsprechenden Schnittstelle des Aufnahmegeräts beim Aufnehmen verbunden wird. Über diese Schnittstelle können die zu Adressdaten verknüpften Adressenangaben und Geokoordinaten aus dem Bestätigungsgerät und/oder Positionsbestimmungsgerät an das Computersystem zur Speicherung in einem Datenspeicher, beispielsweise eine Datenbank, übermittelt werden.

In einer Ausführungsform umfasst das Bestätigungsgerät ein Quittierungsmittel, das dazu vorgesehen ist, nach erfolgter Quittierung das Triggersignal für das Positionsbestimmungsgerät auszulösen. Als Quittierung wird in der vorliegenden Erfindung die direkte oder indirekte Bestätigung des Erreichens des Adressenortes bezeichnet. Eine direkte Bestätigung ist die entsprechende Eingabe im Bestätigungsgerät, dass der Adressenort erreicht ist. Dies könnte beispielsweise durch Eingabe mittels einer Tastatur, eines Bestätigungsknopfes oder durch Setzen eines Häkchens in einem Eingabebildschirm im Bestätigungsgerät erfolgen. Eine indirekte Bestätigung ist beispielsweise eine vorgenommene Handlung, aus der das Erreichen des Adressenortes geschlossen werden kann, beispielsweise die Quittierung des Empfangs einer Sendung durch den Empfänger. Die Sendung empfängt der Empfänger an seinem Adressenort, somit ist bei erfolgter Quittierung der Adressenort ebenfalls erreicht.

In einer Ausführungsform ist das Quittierungsmittel ein Grafiktablett, vorzugsweise zur Erfassung von Unterschriften. Ein Grafiktablett (auch bezeichnet als Digitalisiertablett, Digitizer oder Pen Tablett) ist ein Zeigegerät für Computereingaben. Die Eingaben können durch Schreiben mit dem Stift auf dem Grafiktablett, beispielsweise einem Bildschirm, getätigt werden, wobei ein induktiver Digitizer die Stiftbewegung erfasst. Im Gegensatz zum Touchscreen ist das Tablett dadurch berührungsunempfindlich, das heißt, der Handballen kann beim Schreiben auf dem Tablett liegen, ohne die Erkennung der Stiftposition zu stören. Allerdings ist die Bedienung damit im Gegensatz zu einem PDA ausschließlich mit einem passenden Spezialstift möglich. Diese Spezialstifte haben dafür aber Zusatzfunktionen, so lässt sich die Stärke des Drucks und die Stiftneigung beim Schreiben auswerten, und es gibt frei programmierbare Tasten. Das Grafiktablett kann beispielsweise als interaktives Stift-Display mit verschiedenen Bildschirmdiagonalen ausgeführt sein. Es können als Quittierungsmittel auch sogenannte Touchscreens eingesetzt werden, wobei der Bildschirm jedoch mehrere Eingaben gleichzeitig verarbeiten können muss. Dies ist notwendig, um zu unterscheiden, ob der Benutzer mit dem Stift (oder dem Finger) etwas eingeben will oder nur die Hand ablegt. Für einen Touchscreen kommt ein Eingabestift ohne Elektronik zum Einsatz. Die Quittierung, beispielsweise eine getätigte Unterschrift oder das Setzen eines Hakens in einem dafür vorgesehenen Feld, auf dem Graphiktablett wird mit einem Grafiktablett digital gespeichert. Die Erkennung einer solchen Quittierung beziehungsweise die Speicherung der Quittierung löst beispielsweise das Triggersignal für das Positionsbestimmungsgerät aus. Objekte können hierbei beispielsweise Pakete, Briefe oder Behälter sein.

In einer Ausführungsform sind das Bestätigungsgerät und/oder das Positionsbestimmungsgerät für den Betrieb mittels Batterien ausgestattet. Diese Geräte müssen zum Adressenort bewegt werden, um dort einerseits das Erreichen des Adressenortes zu bestätigen und andererseits dort die Geokoordinaten zu bestimmen. Somit sind diese Geräte bevorzugt als portable Geräte ausgeführt, die zweckmäßigerweise über Batterien betrieben werden.

In einer Ausführungsform besitzen die Adressdaten ein Format, das ermöglicht, Adressenangaben auch in Form eines Freitextes oder einer Abbildung zu speichern. Die Adressendaten entsprechen in weniger entwickelten Ländern nicht notwendigerweise einem festen Format, sondern können beispielsweise in Form einer Wegbeschreibung oder Wegskizze vorliegen. Wegbeschreibungen können als Freitext, Wegskizzen als Abbildungen oder Zeichnungen (beispielsweise im pdf-Format) vorliegen und werden ebenfalls von dem erfindungsgemäßen System als Adressenangabe abgespeichert. Als Freitext wird hierbei jeder Text verstanden, dessen Bestandteile variabel sind und eine beliebige Länge haben können.

In einer bevorzugten Ausführungsform umfasst das Bestätigungsgerät ein Anzeigemittel zumindest zur Anzeige der Adressenangaben, vorzugsweise der Adressdaten. Über die Anzeige von Adressenangaben wird das Auffinden des Adressenortes erleichtert.

Die Erfindung betrifft des Weiteren ein Verfahren zur Ortserfassung von Adressen mit einem Computersystem mit Datenspeicher zur Speicherung von Adressdaten, die Adressenangaben und den Adressenangaben zugeordnete Geokoordinaten umfassen, und mindestens einem Bestätigungsgerät, das über eine Datenverbindung mit mindestens einem Positionsbestimmungsgerät verbunden ist, umfassend die Schritte
- Bestätigung des Erreichens eines Adressenortes mit zugehörigen Adressenangaben mittels des dazu ausgestalteten Bestätigungsgeräts,
- Aussenden eines Triggersignals an das Positionsbestimmungsgerät nach der Bestätigung des Erreichens des Adressenortes,
- Feststellen der Geokoordinaten an diesem Adressenort mittels des dazu ausgestalteten Positionsbestimmungsgerätes nach Empfang des Triggersignals,
- Verknüpfen der festgestellten Geokoordinaten mit den Adressdaten von dem Adressenort, und
- Übertragen der Adressdaten an das Computersystem.

In einer Ausführungsform des Verfahrens wird das Erreichen des Adressenortes direkt oder indirekt über ein Quittierungsmittel im Bestätigungsgerät quittiert und die erfolgte Quittierung löst das Triggersignal für das Positionsbestimmungsgerät aus. Eine direkte Quittierung (Bestätigung) ist die entsprechende Eingabe im Bestätigungsgerät, dass der Adressenort erreicht ist. Dies könnte beispielsweise durch Eingabe mittels einer Tastatur, eines Bestätigungsknopf oder durch Setzen eines Häkchens in einem Eingabebildschirm im Bestätigungsgeräts erfolgen. Eine indirekte Quittierung (Bestätigung) ist beispielsweise eine vorgenommene Handlung, aus der das Erreichen des Adressenortes geschlossen werden kann, beispielsweise die Quittierung des Empfängers einer Sendung, dass er die Sendung erhalten hat. Die Sendung empfängt der Empfänger an seinem Adressenort, somit ist bei erfolgter Quittierung der Adressenort ebenfalls erreicht.

In einer Ausführungsform des Verfahrens werden zumindest die Adressenangaben, vorzugsweise die Adressdaten, in einem Anzeigemittel des Bestätigungsgerätes angezeigt.

In einer Ausführungsform umfasst das Verfahren des Weiteren den Schritt des Verbindens des Bestätigungsgeräts und/oder das Positionsbestimmungsgerät mit einem Aufnahmegerät des Computersystems zur Übertragung der verknüpften Adressdaten zum Computersystem. Diese Verbindung kann beispielsweise über eine Computerschnittstelle erfolgen, wobei die aufgenommenen Geräte eine Schnittstelle als Datenausgang besitzen, die mit einer entsprechenden Schnittstelle des Aufnahmegeräts beim Aufnehmen der Geräte in das Aufnahmegerät verbunden wird. Über diese Schnittstelle können die zu Adressdaten verknüpften Adressenangaben und Geokoordinaten aus dem Bestätigungsgerät und/oder Positionsbestimmungsgerät an das Computersystem zur Speicherung in einem Datenspeicher, beispielsweise eine Datenbank, übermittelt werden.

### Kurze Beschreibung der Abbildungen

Diese und andere Aspekte der Erfindung werden im Detail in den Abbildungen wie folgt gezeigt.
- Fig.1:: ein Anwendungsbeispiel einer Ausführungsform des erfindungsgemäßen Systems.
- Fig.2:: eine schematische Darstellung einer Ausführungsform des erfindungsgemäßen Systems.
- Fig.3: eine schematische Darstellung einer Ausführungsform des erfindungsgemäßen Verfahrens.

### Detaillierte Beschreibung der Ausführungsbeispiele

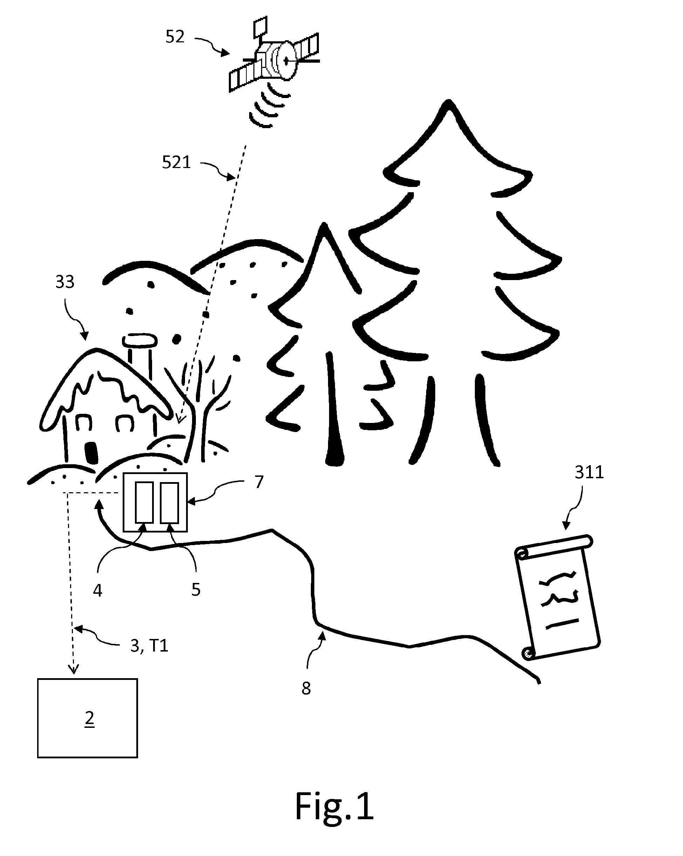

Figur 1 zeigt ein Anwendungsbeispiel für eine Ausführungsform des erfindungsgemäßen Systems in einer schematischen Darstellung. Hier soll beispielsweise eine Postsendung als Objekt einem Empfänger zugestellt werden, der in einem Haus 33 wohnt, das nicht an ein Straßennetz mit üblicher Adresse angeschlossen ist. Das Haus 33 ist der Adressenort 33 für die Zustellung der Postsendung. Als Adressenangabe 31 ist eine Wegbeschreibung als Freitext 311 vorhanden, anhand derer das Haus und damit der Adressenort 33 über den Weg 8 erreicht wird. Die Freitextbeschreibung 311 lautet beispielsweise "Bewohner des Hauses vor den Bergen neben den zwei großen Tannen und dem kleinen Baum". Da eine solche Wegbeschreibung 311 einerseits subjektiv ist und somit leicht missverstanden werden kann und andererseits sich die örtlichen Gegebenheiten so verändern können, dass die Wegbeschreibung 311 eventuell nicht mehr nachvollziehbar ist, muss der Adressenort 33 sicher und eindeutig bezeichnet werden. Dies ist möglich, indem die Adressenangaben 31 mit dem Adressenort 33 mit den entsprechenden Geokoordinaten mittels eines Bestätigungsgeräts 4 verknüpft werden. Dies ist beispielsweise durch Empfang eines Satellitensignals 512 von einem Satellitennavigationssystem 52 durch ein Positionsbestimmungsgeräts 5 möglich, das mit dem Bestätigungsgerät in einem gemeinsamen Gehäuse 7 angeordnet und verbunden ist. Das Positionsbestimmungsgerät bestimmt aus dem Satellitensignal 52 die Geokoordinaten am Adressenort 33 und verknüpft diese mit den Freitext-Adressenangaben 311 zu Adressdaten 3, die beispielsweise über ein Mobilfunknetz zu einem Computersystem 2 übertragen T1 werden und in diesem Computersystem 2 in einem Datenspeicher, beispielsweise einer Datenbank, für spätere Zustellungen/Abholungen zu/von diesem Adressenort gespeichert werden.

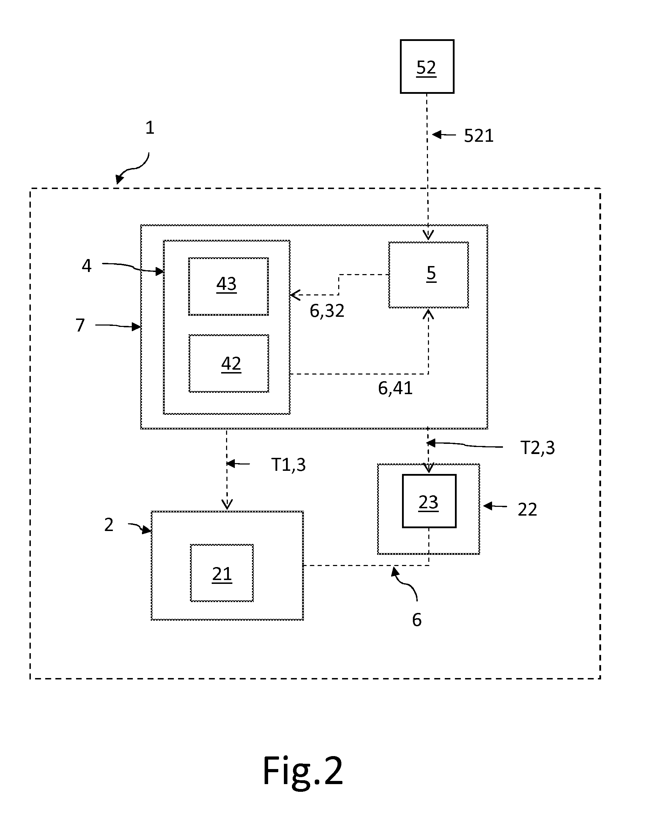

Figur 2 zeigt die Interaktion der einzelnen Komponenten im erfindungsgemäßen System 1 im Detail anhand einer schematischen Darstellung einer Ausführungsform des erfindungsgemäßen Systems 1.

Das System 1 umfasst ein Bestätigungsgerät 4 und ein Positionsbestimmungsgerät 5, die in einem gemeinsamen Gerätegehäuse 7 angeordnet sind. Das gemeinsame Gehäuse mit Bestätigungsgerät 4 und Positionsbestimmungsgerät 5 wird bei der Auslieferung von Objekten zu Empfängern mitgeführt, so dass diese Geräte die jeweiligen Adressenorte zu den auszuliefernden Objekten zusammen mit dem Kurierdienst oder dem Kurier erreichen. Damit der Adressenort aufgefunden werden kann, umfasst in dieser Ausführungsform das Bestätigungsgerät 4 ein Anzeigemittel 43 zumindest zur Anzeige A der Adressenangaben 31, vorzugsweise zur Anzeige der vollständigen Adressdaten 3. Im Rahmen der vorliegenden Erfindung kann in anderen Ausführungsformen gegebenenfalls auf ein Anzeigemittel 43 verzichtet werden, wenn die Navigation zum Adressenort 33 anderweitig vorgenommen wird. Mit dem Bestätigungsgerät 4 wird das Erreichen eines Adressenortes 33 mit zugehörigen Adressenangaben 31 nach dem Erreichen bestätigt. Das Bestätigungsgerät 4 kann dafür zusätzlich ein Quittierungsmittel 42 umfassen, das nach erfolgter Quittierung, beispielsweise durch Unterschrift auf einem Grafiktablett, das Triggersignal 41 für das Positionsbestimmungsgerät 5 auslöst. Das Positionsbestimmungsgerät empfängt das Triggersignal 41 über eine Datenverbindung 6 und stellt daraufhin die Geokoordinaten 32 an diesem Adressenort 33 mittels eines von einem Satellitennavigationssystem 52 empfangenen Satellitensignal 521 fest. Dazu kann das Positionsbestimmungsgerät 5 beispielsweise einen GPS-Mikrocontrollerchip umfassen, mit dem aus dem Satellitensignal 521 Geokoordinaten 32 errechnet werden. Diese Geokoordinaten 32 werden mit der gleichen oder einer anderen Datenverbindung 6 zurück an das Bestätigungsgerät übertragen (siehe gestrichelte Pfeile) und dort mit den Adressenangaben 31 zu Adressdaten 3 verknüpft. Diese Adressdaten werden zu einem Computersystem 2 mit Datenspeicher 21 zur Speicherung der Adressdaten 3 übertragen T1, T2. Dabei kann eine Übertragung T1 beispielsweise mittels einer Mobilfunkverbindung direkt zum Computersystem erfolgen. Das Computersystem kann dafür mit entsprechenden Empfangsmitteln ausgestattet sein. In einer anderen Ausführungsform (hier als Alternative in der gleichen Figur gezeigt) wird das gemeinsame Gehäuse 7 mit Bestätigungsgerät 4 und Positionsbestimmungsgerät 5 in ein Aufnahmegerät 22 gesteckt, mit dem die Adressdaten 3 über eine Computerschnittstelle 23 aus dem gemeinsamen Gehäuse 7 übertragen T2 (ausgelesen) werden und vom Aufnahmegerät 22 über eine Datenverbindung 6 an das Computersystem 2 zur Speicherung in einem Datenspeicher 21 weitergeleitet werden. In anderen Ausführungsformen müssen das Bestätigungsgerät 4 und das Positionsbestimmungsgerät 5 nicht notwendigerweise ein gemeinsames Gehäuse 7 besitzen. Sie müssen lediglich über eine Datenverbindung miteinander verbunden sein. Datenverbindungen im Rahmen der vorliegenden Erfindung können drahtlos (beispielsweise mittels Mobilfunk, WLAN, Bluetooth oder andere Techniken), mit einem Kabel oder einer anderen festen Verbindung (beispielsweise einer Platine mit Leiterbahnen) hergestellt werden. Da die Adressenangaben 31 in Form eines Freitextes 311 oder einer Abbildung 312 vorliegen können, ist das Computersystem 2, insbesondere der Datenspeicher 21 dazu geeignet, die Adressdaten 3 in einem Format abzuspeichern, das das Abspeichern von Freitexten 311 oder Abbildungen 312 als Teil der Adressdaten 3 unterstützt. Das Verknüpfen der Adressenangaben 31 und Geokoordinaten 32 zu Adressdaten 3 wird von einem entsprechenden Prozessor vorgenommen, beispielsweise angeordnet im Bestätigungsgerät 4. Dieser Prozessor könnte in alternativen Ausführungsformen im Rahmen der vorliegenden Erfindung auch im Positionsbestimmungsgeräte oder an anderen Stellen im erfindungsgemäßen System angeordnet sein.

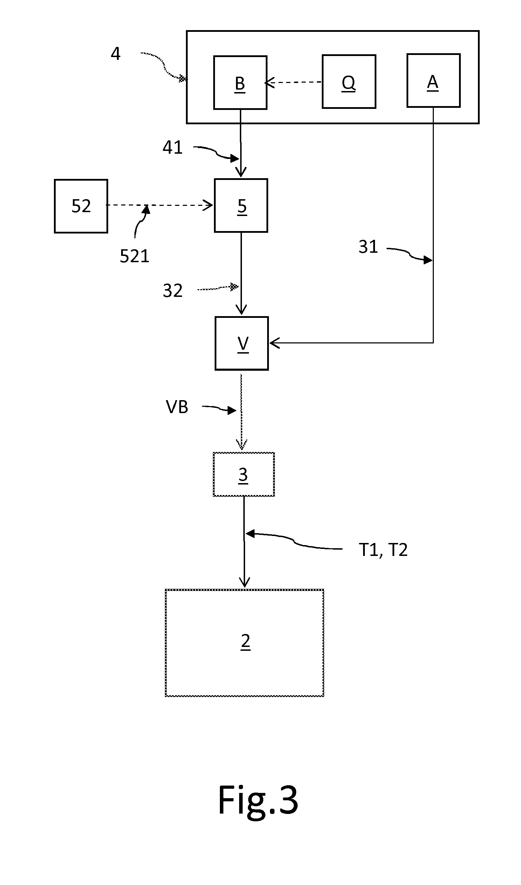

Figur 3 zeigt eine der Figur 2 entsprechende schematische Darstellung einer Ausführungsform des erfindungsgemäßen Verfahrens. Das Verfahren zur Ortserfassung von Adressenangaben mit einem Computersystem 2 mit Datenspeicher 21 zur Speicherung von Adressdaten 3, die Adressenangaben 31 und den Adressenangaben 31 zugeordnete Geokoordinaten 32 umfassen, und mindestens einem Bestätigungsgerät 4, das über eine Datenverbindung 6 mit mindestens einem Positionsbestimmungsgerät 5 verbunden ist, umfassen dabei die Schritte (a) Bestätigung B des Erreichens eines Adressenortes 33 mit zugehörigen Adressenangaben 31 mittels des dazu ausgestalteten Bestätigungsgeräts 4, hier nach vorheriger Quittierung Q der Ablieferung eines Postsendung am Adressenort 33, dessen Adressenangaben 31 in einem Anzeigemittel angezeigt A wurden, (b) Aussenden eines Tiggersignals 41 an das Positionsbestimmungsgerät 5 nach der Bestätigung B des Erreichens des Adressenortes 33, (c) Feststellen der Geokoordinaten 32 an diesem Adressenort 33 mittels des dazu ausgestalteten Positionsbestimmungsgerätes 5 nach Empfang des Triggersignals 41, (d) Verknüpfen V der festgestellten Geokoordinaten 32 mit den Adressdaten 3 von dem Adressenort 33 mit einem Prozessor, und (e) Übertragen T1, T2 der Adressdaten 3 an das Computersystem 2. Die Übertragung T1, T2 wird nach Herstellung einer Verbindung VB zwischen Bestätigungsgerät 4 und/oder dem Positionsbestimmungsgerät 5 mit einem Aufnahmegerät 22 des Computersystems 2 oder mittels einer direkten Verbindung vorgenommen. Das Erreichen des Adressenortes 33 kann sowohl direkt (beispielsweise über einen dafür vorgesehenen Bestätigungsknopf) als auch indirekt wie hier gezeigt über ein Quittierungsmittel 42 im Bestätigungsgerät 4 quittiert Q werden, wobei die erfolgte Quittierung Q das Triggersignal 41 für das Positionsbestimmungsgerät 5 auslöst.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### LISTE DER BEZUGSZEICHEN

- 1: erfindungsgemäßes System
- 2: Computersystem
- 21: Datenbank
- 22: Aufnahmegerät
- 23: Computerschnittstelle
- 3: Adressdaten
- 31: Adressenangaben
- 311: Adressenangaben in Freitext
- 312: Adressenangaben in Form einer Abbildung
- 32: Geokoordinaten an einem Adressenort
- 33: Adressenort
- 4: Bestätigungsgerät
- 41: Triggersignal
- 42: Quittierungsmittel
- 43: Anzeigemittel
- 5: Positionsbestimmungsgerät
- 51: GPS-Mikrokontrollerchip
- 52: Satellitennavigationssystem
- 521: Satellitensignal
- 6: Datenverbindung
- 7: gemeinsames Gehäuse für Bestätigungsgerät und Positionsbestimmungsgerät
- A: Anzeigen der Adressenangaben bzw. der Adressdaten
- B: Bestätigen des Erreichend des Adressenortes
- Q: Quittieren zur Bestätigung des Erreichens des Adressenortes
- T1,T2: Übertragen der verknüpften Adressdaten zum Computersystem
- V: Verknüpfen von Adressenangaben und Geokoordinaten zu Adressdaten
- VB: Verbinden des Bestätigungs- / Positionsbestimmungsgeräts mit dem Computersystem

## Patentansprüche

1. Ein System (1) zur Ortserfassung von Adressenangaben, umfassend ein Computersystem (2) mit Datenspeicher (21) zur Speicherung von Adressdaten (3), die Adressenangaben (31) und den Adressenangaben (31) zugeordnete Geokoordinaten (32) umfassen, ein Bestätigungsgerät (4) zur Bestätigung des Erreichens eines Adressenortes (33) mit zugehörigen Adressenangaben (31), ein Positionsbestimmungsgerät (5) zur Feststellung von Geokoordinaten (32) an diesem Adressenort (33), wobei das Bestätigungsgerät (4) mit dem Positionsbestimmungsgerät (5) über eine Datenverbindung (6) verbunden ist und dazu ausgestaltet ist, nach der Bestätigung des Erreichens des Adressenortes (33) ein Tiggersignal (41) an das Positionsbestimmungsgerät (5) zu senden, und das Positionsbestimmungsgerät (5) dazu ausgestaltet ist, nach Empfangen des Triggersignals (41) die Geokoordinaten (32) des Adressenortes (33) festzustellen, und das Bestätigungsgerät (4) oder das Positionsbestimmungsgerät (5) dazu ausgestaltet ist, anschließend die Geokoordinaten (32) des Adressenortes (33) mit den Adressenangaben (31) zu dem Adressenort (33) zu Adressdaten (3) zu verknüpfen und zum Computersystem (2) zu übertragen (T1, T2).

2. Das System (1) nach Anspruch 1, **dadurch gekennzeichnet, dass** das Bestätigungsgerät (4) und das Positionsbestimmungsgerät (5) in einem gemeinsamen Gerätegehäuse (7) angeordnet sind.

3. Das System (1) nach Anspruch 1 oder 2, **dadurch gekennzeichnet, dass** das Bestätigungsgerät (4) ein Quittierungsmittel (42) umfasst, das dazu vorgesehen ist, nach erfolgter Quittierung (Q) das Triggersignal (41) für das Positionsbestimmungsgerät (5) auszulösen.

4. Das System (1) nach Anspruch 3, **dadurch gekennzeichnet, dass** Quittierungsmittel (41) ein Graphiktablett, vorzugsweise zur Erfassung von Unterschriften, ist.

5. Das System (1) nach einem der voranstehenden Ansprüche, **dadurch gekennzeichnet, dass** das Positionsbestimmungsgerät (5) einen GPS-Mikrokontrollerchip (51) umfasst.

6. Das System (1) nach einem der voranstehenden Ansprüche, **dadurch gekennzeichnet, dass** das Bestätigungsgerät (4) und/oder das Positionsbestimmungsgerät (5) für den Betrieb mittels Batterien ausgestattet sind.

7. Das System (1) nach einem der voranstehenden Ansprüche, **dadurch gekennzeichnet, dass** die Adressdaten (3) ein Format besitzen, das ermöglicht, Adressenangaben (31) auch in Form eines Freitextes (311) oder einer Abbildung (312) zu speichern.

8. Das System (1) nach Anspruch 7, **dadurch gekennzeichnet, dass** das Bestätigungsgerät (4) ein Anzeigemittel (43) zumindest zur Anzeige (A) der Adressenangaben (31), vorzugsweise der Adressdaten (3), umfasst.

9. Das System(1) nach einem der voranstehenden Ansprüchen, **dadurch gekennzeichnet, dass** Computersystem (2) mindestens ein Aufnahmegerät (22) mit Computerschnittstelle (23) zur Übertragung (T2) der verknüpften Adressdaten (3) zum Computersystem (2) umfasst.

10. Ein Verfahren zur Ortserfassung von Adressenangaben mit einem Computersystem (2) mit Datenspeicher (21) zur Speicherung von Adressdaten (3), die Adressenangaben (31) und den Adressenangaben (31) zugeordnete Geokoordinaten (32) umfassen, und mindestens einem Bestätigungsgerät (4), das über eine Datenverbindung (6) mit mindestens einem Positionsbestimmungsgerät (5) verbunden ist, umfassend die Schritte
- Bestätigung (B) des Erreichens eines Adressenortes (33) mit zugehörigen Adressenangaben (31) mittels des dazu ausgestalteten Bestätigungsgeräts (4),
- Aussenden eines Triggersignals (41) an das Positionsbestimmungsgerät (5) nach der Bestätigung (B) des Erreichens des Adressenortes (33),
- Feststellen der Geokoordinaten (32) an diesem Adressenort (33) mittels des dazu ausgestalteten Positionsbestimmungsgerätes (5) nach Empfang des Triggersignale (41),
- Verknüpfen (V) der festgestellten Geokoordinaten (32) mit den Adressdaten (3) von dem Adressenort (33), und
- Übertragen (T1, T2) der Adressdaten (3) an das Computersystem (2).

11. Das Verfahren nach Anspruch 10, **dadurch gekennzeichnet, dass** das Erreichen des Adressenortes (33) direkt oder indirekt über ein Quittierungsmittel (42) im Bestätigungsgerät (4) quittiert (Q) wird und die erfolgte Quittierung (Q) das Triggersignal (41) für das Positionsbestimmungsgerät (5) auslöst.

12. Das Verfahren nach Anspruch 10 oder 11, **dadurch gekennzeichnet, dass** zumindest die Adressenangaben (31), vorzugsweise die Adressdaten (3), in einem Anzeigemittel (43) des Bestätigungsgerätes (4) angezeigt werden.

13. Das Verfahren nach einem der Ansprüchen, **dadurch gekennzeichnet, dass** das Verfahren des Weiteren den Schritt des Verbindens (VB) des Bestätigungsgerät und/oder das Positionsbestimmungsgerät mit einem Aufnahmegerät (22) des Computersystems (2) zur Übertragung (T2) der verknüpften Adressdaten (3) zum Computersystem (2) umfasst.
